# FASCICULE DE BREVET EUROPEEN

(11) **EP 3 792 054 B1**
(45) Date de publication et mention de la délivrance du brevet: **16.03.2022**
(21) Numéro de dépôt: 20187146.4
(22) Date de dépôt: 22.07.2020
(51) Int. Cl.: B32B 5/18, B32B 7/12, B32B 17/04, B32B 27/06, B32B 27/08, B32B 27/12, B32B 27/16, B32B 27/22, B32B 27/30

(54) **STRUCTURE MULTICOUCHE POUR LA REALISATION D'UN REVETEMENT DE SOL, A PROPRIETES D'ISOLATION ACOUSTIQUE ET DE RESISTANCE AU POINÇONNEMENT**
MEHRSCHICHTAUFBAU ZUR HERSTELLUNG EINES BODENBELAGS MIT SCHALLDÄMMENDEN UND DURCHSTOSSFESTEN EIGENSCHAFTEN
MULTI-LAYERED STRUCTURE FOR THE PRODUCTION OF A FLOOR COVERING WITH SOUND-INSULATING AND PUNCTURE-RESISTANT PROPERTIES

(30) Priorité: 12.09.2019 FR 1910043
(43) Date de publication de la demande: 17.03.2021
(73) Titulaire: GERFLOR, 69100 Villeurbanne (FR)
(72) Inventeur: CHABAN, Nicolas, 26130 SAINT RESTITUT (FR)
(74) Mandataire: Cabinet Laurent & Charras

(56) Documents cités:
- EP-A1- 3 495 136
- EP-A1- 3 505 342
- US-A- 5 910 358

## Description

### DOMAINE TECHNIQUE

La présente invention concerne le secteur technique des revêtements de sol ou mur, et concerne plus particulièrement une structure multicouche pour la réalisation d'un revêtement de sol ou mur présentant des propriétés d'isolation acoustique et de résistance au poinçonnement.

La structure multicouche selon l'invention concerne les revêtements de sol présentés en dalle ou en lame, en pose collée, ou éventuellement en pose libre.

### ART ANTERIEUR

Il est bien connu de l'état de la technique de réaliser des structures multicouches pour la réalisation d'un revêtement de sol ou mur, présentant des propriétés d'isolation acoustique. En effet, la pollution sonore est devenue une problématique à fort enjeu sociétal. De nombreux acteurs du marché du revêtement de sol proposent des structures multicouches comprenant des couches de mousse et d'isolation acoustique intégrées à la structure multicouche, ou bien rapportées, par exemple en rouleau.

D'une manière générale, dans l'art antérieur, une structure multicouche pour la réalisation d'un revêtement de sol ou mur comprend :
- un premier ensemble comprenant successivement au moins :
   ^{∗} une couche d'usure transparente réalisée à partir de polychlorure de vinyle ;
   ^{∗} une couche décor liée à la couche d'usure ;
   ^{∗} une couche d'envers, liée à la couche décor, réalisée à partir de polychlorure de vinyle plastifié et chargé ;
- une couche de mousse en polyéthylène réticulé, liée à la couche d'envers, conférant des propriétés d'isolation acoustique à la structure, et présentant une face inférieure destinée à être en contact avec le sol ou mur.

Le document EP3505342 par exemple, montre une structure comprenant le premier ensemble cité ci-dessus ainsi qu'une couche de mousse liée à la couche d'envers.

L'augmentation de l'épaisseur de la couche de mousse permet d'améliorer l'atténuation sonore, cependant cela dégrade la résistance au poinçonnement rémanent du revêtement de sol. Les produits présents sur le marché ne permettent pas de garantir une atténuation d'au moins 18 dB, voire de 19 dB selon la norme NF EN ISO 717-2, tout en conservant une valeur de résistance au poinçonnement rémanent inférieure à 0,25.

Par ailleurs, lorsque la couche de mousse est rapportée, cela fait naître l'inconvénient d'une pose en deux temps, on colle d'abord la couche de mousse puis on colle les dalles sur ladite couche de mousse, ce qui complexifie et rallonge le temps de pose.

### EXPOSE DE L'INVENTION

L'un des buts de l'invention est donc de remédier aux inconvénients précités en proposant une structure multicouche pour la réalisation d'un revêtement de sol ou mur, qui permet une atténuation acoustique d'au moins 18dB selon la norme NF EN ISO 717-2, tout en conservant une valeur de résistance au poinçonnement rémanent inférieure à 0,25.

A cet effet, il a été mis au point une structure multicouche pour la réalisation d'un revêtement de sol ou mur, conforme à celle de l'état de la technique en ce qu'elle comprend :
- un premier ensemble comprenant successivement au moins :
   ^{∗} une couche d'usure transparente réalisée à partir de polychlorure de vinyle ;
   ^{∗} une couche décor liée à la couche d'usure ;
   ^{∗} une couche d'envers, liée à la couche décor, réalisée à partir de polychlorure de vinyle plastifié et chargé ;
- une couche de mousse, liée à la couche d'envers, conférant des propriétés d'isolation acoustique à la structure, et présentant une face inférieure destinée à être en contact avec le sol ou mur.

Selon l'invention :
- le premier ensemble comprend un module de traction pour 1% d'allongement supérieur à 5 MPa, par exemple mesuré selon la méthode M.1 *« détermination de la ténacité »* donnée par le référentiel QB 30 du Centre Scientifique et Technique du Bâtiment (CSTB), et un module de flexion à 3,5% compris entre 10 Mpa et 20 Mpa, mesuré selon la norme ISO 178 :2019 ;
- la couche de mousse est une couche de mousse de polyoléfine réticulée, présentant une épaisseur comprise entre 0,5 mm et 2 mm, et une densité comprise entre 60 kg/m³ et 120 kg/m3.

De ce qui précède, les caractéristiques mécaniques du premier ensemble et de la couche de mousse sont optimisées et permettent d'atteindre l'objectif posé par l'invention, et notamment une atténuation d'au moins 18dB selon la norme NF EN ISO 717-2, et un enfoncement rémanent lors d'un poinçonnement selon la norme ISO 24343-1 d'une durée de 2h30, inférieur à 0,25, voire inférieur à 0,2 mm.

De manière plus précise, la couche de mousse de polyoléfine réticulée est une couche de mousse de polyéthylène réticulé ou de polypropylène réticulé.

La couche de mousse est réticulée par irradiation (création de liaisons structurales), cette opération permet d'améliorer ses propriétés telles la résistance à la température, la résistance mécanique à la compression, ou encore la résistance à l'humidité. En particulier, une mousse en polyéthylène réticulé permet d'obtenir un bon compromis entre la résistance mécanique à la compression, notamment pour résister au trafic subit par le revêtement de sol, et les propriétés acoustiques du revêtement de sol.

De préférence, la couche de mousse présente une épaisseur comprise entre 0,8 mm et 1,2 mm, et une densité comprise entre 80 kg/m³ et 110 kg/m³. Cette combinaison apporte un meilleur compromis entre les propriétés acoustiques et de résistance au poinçonnement.

Partant de ce concept, la structure multicouche peut présenter plusieurs configurations.

D'une manière générale, la structure multicouche présente une épaisseur comprise entre 1,5 mm et 6 mm, et de préférence comprise entre 1,5 mm et 3 mm.

Par exemple, la couche d'usure comprend une épaisseur comprise entre 0,3 mm et 1 mm, la couche décor est un film PVC imprimé d'épaisseur comprise entre 60 et 110µm, et la couche d'envers présente une épaisseur comprise entre 1 et 3 mm.

Par ailleurs, la couche d'envers peut être semi-rigide ou bien armée.

Dans le cas où la couche d'envers est semi-rigide, elle comprend une quantité de plastifiant comprise entre 10 et 30 pour cent parts de résine (PCR), et de préférence comprise entre 15 et 25 PCR.

Dans le cas où la couche d'envers est armée, elle comprend deux couches intermédiaires réalisées à partir de polychlorure de vinyle plastifié et chargé, et disposées de part et d'autre d'une armature de renfort. Les deux couches intermédiaires comprennent notamment une quantité de plastifiant classique, c'est-à-dire comprise entre 25 et 50 PCR.

### BRÈVE DESCRIPTION DES FIGURES

D'autres avantages et caractéristiques ressortiront mieux de la description qui va suivre, donnée à titre d'exemple non limitatif, en référence aux figures annexées dans lesquelles :
**[**Fig. 1] la figure 1 est une représentation schématique, en coupe, d'une première forme de réalisation d'une structure multicouche selon l'invention ;
[Fig. 2] la figure 2 est une représentation schématique similaire à celle de la figure 1, illustrant un deuxième mode de réalisation de l'invention, avec une couche d'envers armée.

### DESCRIPTION DETAILLEE DE L'INVENTION

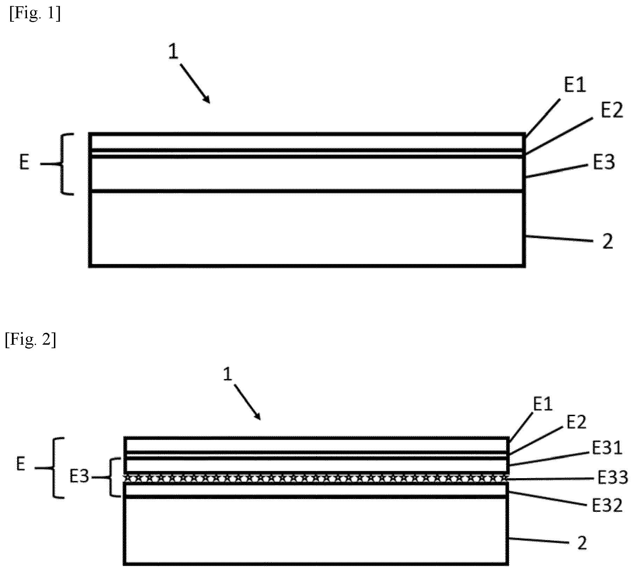

En référence aux figures 1 et 2, l'invention concerne une structure multicouche (1) pour la réalisation d'un revêtement de sol ou mur, présentant des propriétés d'isolation acoustique selon la norme NF EN ISO 717-2, tout en conservant des propriétés de résistance au poinçonnement selon la norme ISO 24343-1.

D'une manière générale, la structure multicouche (1) comprend un premier ensemble (E), c'est-à-dire une structure supérieure dite rigide, à laquelle est liée une couche de mousse (2) conférant des propriétés d'isolation acoustique à la structure multicouche (1), et présentant une face inférieure destinée à être en contact avec le sol ou mur.

Le premier ensemble (E) comprenant successivement au moins :
- une couche d'usure (E1) transparente, notamment à la lumière du domaine du visible, réalisée à partir de polychlorure de vinyle ;
- une couche décor (E2) liée à la couche d'usure (E1) ;
- une couche d'envers (E3), liée à la couche décor (E2), réalisée à partir de polychlorure de vinyle plastifié et chargé ;

Dans ce type de structure multicouche (1) les couches sont liées les unes aux autres par collage, lamination à chaud, ou toute autre technique appropriée et bien connue de l'homme du métier. Ce type de structure multicouche (1) se présente en dalle ou en lame, et s'utilise généralement en posée collée. Bien entendu, il est possible de l'utiliser en pose libre avec un système d'assemblage type rainure/languette ou équivalent, et dans laquelle le premier ensemble (E), hors couche de mousse (2), présente une épaisseur supérieure à 4 mm.

La couche de mousse (2) est une couche de mousse de polyoléfine réticulée, par exemple en particulier en mousse de polyéthylène ou polypropylène réticulé, et présente une épaisseur comprise entre 0,5 et 2 mm, voire entre 0,8 mm et 1,2 mm, et une densité comprise entre 60 kg/m³ et 120 kg/m³, voire entre 80 kg/m³ et 110 kg/m³.

En vue d'optimiser les performances de résistance au poinçonnement, le premier ensemble (E) comprend un module de traction pour 1% d'allongement supérieur à 5 MPa, par exemple mesuré selon la méthode M.1 *« détermination de la ténacité »* donnée par le référentiel QB 30 du CSTB. En d'autres termes, il faut exercer une traction d'une force supérieure à 5 MPa, de part et d'autre d'un échantillon de la structure, pour tenter de l'allonger d'au moins 1% de sa longueur.

Selon la méthode M1 *« détermination de la ténacité »* donnée par le référentiel QB 30 du CSTB, un matériau a une ténacité d'autant plus grande que la contrainte nécessaire pour provoquer un allongement déterminé (1% par exemple) est élevée. Le « Module de traction pour 1% d'allongement » correspond à la contrainte linéique (rapportée à la largeur de l'éprouvette) qui provoque un allongement de 1%.

La méthode de détermination du module de traction pour 1% d'allongement consiste à réaliser les opérations suivantes :
Pour déterminer les caractéristiques d'allongement du matériau, on trace la courbe allongement/charge dans des conditions définies de dimensions d'éprouvette et de vitesse de déformation, puis on mesure la contrainte provoquant un allongement de 1%, celle-ci est égale au module de traction pour 1% d'allongement.

Les éprouvettes sont conditionnées à une température de 23° +/- 2 °C à une humidité relative de 50% +/- 5% pendant au moins 24 heures avant l'essai. Les échantillons doivent provenir de lots n'ayant subi aucun traitement (produit d'entretien ou autres) depuis leur sortie de fabrication.

L'appareillage consiste en une machine d'essai de traction avec un dispositif d'enregistrement permettant de multiplier par au moins deux l'allongement de l'éprouvette et dont chaque centimètre de l'échelle des charges ne représente pas plus de 3 daN, Distance initiale entre mors : 250 +/- 1 mm, vitesse d'écartement : 50 +/- 2 mm/min, vitesse de déformation : 20%/min.

On prélève douze éprouvettes sur chaque échantillon (six pour l'essai initial et six autres pour réaliser un contre essai si nécessaire). Six éprouvettes doivent être découpées dans le sens de fabrication et les six autres dans le sens transversal.

Les éprouvettes ont une longueur minimale de 300 mm et une largeur de 50 +/- 1 mm. On réalise deux marques à l'aide d'un marqueur à une distance de 250 mm des deux extrémités de l'éprouvette.

Mode opératoire :
- On vérifie l'échelle de charges utilisée et le rapport « vitesse de papier/vitesse du mors mobile ».
- On place l'éprouvette entre les mors en veillant à ce qu'elle reste rectiligne après serrage.
- On met le dynamomètre en marche, y compris le dispositif enregistreur
- On arrête l'essai lorsqu'un allongement de 5% est atteint.

Afin de calculer les résultats, on lit la courbe allongement/charge, les charges correspondant à un allongement de 1% et on les rapporte à la largeur de l'éprouvette en N/50 mm avec une décimale. On détermine, pour chaque sens, les moyennes des trois résultats obtenus. L'échantillon est caractérisé par la plus faible des deux moyennes (sens fabrication ou sens transversal). Si l'un des échantillons ne satisfait pas à la spécification, on essaie trois nouvelles éprouvettes pour l'orientation concernée ; l'échantillon est caractérisé par la moyenne des six résultats.

Le premier ensemble (E) présente également un module de flexion à 3,5% compris entre 10 Mpa et 20 Mpa, mesuré selon la norme ISO 178 :2019. En d'autres termes, il faut exercer une force de pression au milieu de l'échantillon, comprise entre 10 MPa et 20 Mpa pour fléchir l'échantillon d'une flèche équivalent à 3,5% de la longueur de l'échantillon.

Ainsi, la combinaison des caractéristiques mécaniques du premier ensemble (E) et de la couche de mousse (2) sont optimisées et permettent d'atteindre une atténuation acoustique d'au moins 18dB selon la norme NF EN ISO 717-2, tout en conservant une valeur de résistance au poinçonnement rémanent inférieure à 0,25 voire inférieure à 0,2.

La structure multicouche (1) selon l'invention présente une épaisseur comprise entre 1,5 mm et 6 mm, et de préférence comprise entre 1,5 mm et 3 mm.

Par exemple, la couche d'usure (E1) comprend une épaisseur comprise entre 0,3 mm et 1 mm, la couche décor (E2) est un film PVC imprimé par exemple par héliogravure ou impression numérique, et présente une épaisseur généralement comprise entre 50 et 100 µm, plus particulièrement de 70 µm, tandis que la couche d'envers (E3) présente une épaisseur comprise entre 1 et 3 mm.

En référence à la figure 1, la couche d'envers (E3) peut être semi-rigide, c'est-à-dire qu'elle comprend une quantité de plastifiant comprise entre 10 et 30 pour cent parts de résine (PCR), et de préférence comprise entre 15 et 25 PCR.

En référence à la figure 2, la couche d'envers (E3) est armée, elle comprend deux couches intermédiaires (E31, E32) réalisées à partir de polychlorure de vinyle plastifié et chargé, et disposées de part et d'autre d'une armature de renfort (E33), du type voile de verre ou grille de verre par exemple. Les deux couches intermédiaires (E31, E32) comprennent notamment une quantité de plastifiant classique, c'est-à-dire comprise entre 25 et 50 PCR.

Afin de valider l'atténuation acoustique, et la résistance au poinçonnement, des tests ont été réalisés avec une structure multicouche (1) comprenant un premier ensemble (E) comprenant :
- une couche d'usure (E1) en PVC plastifié de 0,5mm d'épaisseur et présentant une résistance à l'usure ≤ 2mm³ selon la norme EN 660.2
- un film décor (E2) imprimé par héliogravure présentant une épaisseur de 70 µm
- une couche d'envers (E3) en PVC plastifié, avec 20 PCR de plastifiant type DINP, 200 PCR de charges type Carbonate de Calcium, 14 PCR d'aides procédé type Stéarate de Calcium.

Le premier ensemble (E) présente une valeur de module de traction pour 1% d'allongement de 5,84 MPa, mesuré selon la méthode M.1 *« détermination de la ténacité »* donnée par le référentiel QB 30 du CSTB, et un module de flexion à 3,5% de 13,18 MPa, mesuré selon la norme ISO 178 :2019.

Ce premier ensemble (E) a été lié à six couches de mousse (2) différentes, pour réaliser six tests acoustiques selon la norme NF EN ISO 717-2 et de poinçonnement selon la norme ISO 24343-1.

Les résultats des tests sont compilés dans le tableau ci-dessous :

**[Tableau 1]**

| | | | **Atténuation acoustique** | **Acoustique à la marche** | **Poinçonnement 2h30** | **Résultats** |
|---|---|---|---|---|---|---|
| **Couche de mousse** | **Epaisseur (mm)** | **Densité (kg.m³)** | **dB** | **dB** | **mm** | **OK/NOK** |
| **Polyéthylène réticulé** | **1** | **100** | 19 | 69 | 0,18 | OK |
| **Polyéthylène réticulé** | **1** | **83** | 19 | 69 | 0,23 | OK |
| **Polyéthylène réticulé** | **1** | **55** | 20 | 68 | 0,32 | NOK |
| **Polyéthylène non réticulé** | **1,5** | **75** | 17 | 70 | 0,18 | NOK |
| **Polypropylène réticulé** | **1** | **100** | 19 | 69 | 0,23 | OK |
| **Polystyrène** | **1,5** | **100** | 17 | 70 | 0,28 | NOK |

Les résultats montrent qu'une couche de mousse (2) en polyéthylène réticulé dont la densité est inférieure à 60 kg.m³ dégrade la résistance au poinçonnement, tandis que celles dont la densité est supérieure à 60 kg.m³ permettent de conserver une bonne résistance au poinçonnement, c'est-à-dire inférieure à 0,25. De même, une couche de mousse (2) en polypropylène réticulé dont la densité est supérieure à 60 kg.m³ et préférentiellement entre 80 et 110 kg.m³ permet de conserver une bonne résistance au poinçonnement.

Une couche de mousse (2) en polyéthylène non réticulé ne permet pas d'obtenir une atténuation acoustique suffisante, même avec une forte épaisseur.

Une couche de mousse (2) en polystyrène s'écrase sous la contrainte et n'est pas suffisamment résiliente ce qui donne de mauvais résultats en poinçonnement.

Il ressort de ce qui précède que l'invention fournit bien une structure multicouche (1) pour la réalisation de revêtements de sol, qui présente des propriétés d'isolation acoustique, tout en permettant de conserver une bonne résistance au poinçonnement.

## Revendications

1. Structure multicouche (1) pour la réalisation d'un revêtement de sol ou mur, la structure comprenant :
- un premier ensemble (E) comprenant successivement au moins :
^{∗} une couche d'usure (E1) transparente réalisée à partir de polychlorure de vinyle ;
^{∗} une couche décor (E2) liée à la couche d'usure (E1) ;
^{∗} une couche d'envers (E3), liée à la couche décor (E2), réalisée à partir de polychlorure de vinyle plastifié et chargé ;
- une couche de mousse (2), liée à la couche d'envers (E3), conférant des propriétés d'isolation acoustique à la structure, et présentant une face inférieure destinée à être en contact avec le sol ou mur ;
***caractérisée* en ce que** :
- le premier ensemble (E) comprend un module de traction pour 1% d'allongement supérieur à 5 MPa, et un module de flexion à 3,5% compris entre 10 Mpa et 20 Mpa, mesuré selon la norme ISO 178 :2019 ;
- la couche de mousse (2) est une couche de mousse de polyoléfine réticulée, présentant une épaisseur comprise entre 0,5 mm et 2 mm, et une densité comprise entre 60 kg/m³ et 120 kg/m³.

2. Structure multicouche (1) selon la revendication 1, ***caractérisée* en ce que** la couche d'envers (E3) comprend une quantité de plastifiant comprise entre 10 et 30 pour cent parts de résine, et de préférence comprise entre 15 et 25 pour cent parts de résine.

3. Structure multicouche (1) selon la revendication 1, ***caractérisée* en ce que** la couche d'envers (E3) comprend deux couches intermédiaires (E31, E32) réalisées à partir de polychlorure de vinyle plastifié et chargé, et disposées de part et d'autre d'une armature de renfort (E33), les deux couches intermédiaires (E31, E32) comprenant une quantité de plastifiant comprise entre 25 et 50 PCR pour cent parts de résine.

4. Structure multicouche (1) selon la revendication 1, ***caractérisée* en ce que** l'épaisseur de la couche de mousse (2) est comprise entre 0,8 mm et 1,2mm.

5. Structure multicouche (1) selon la revendication 1, ***caractérisée* en ce que** la densité de la couche de mousse (2) est comprise entre 80 kg/m³ et 110 kg/m³

6. Structure multicouche (1) selon la revendication 1, ***caractérisée* en ce que** la couche de mousse (2) de polyoléfine réticulée est une couche de mousse de polyéthylène réticulé

7. Structure multicouche (1) selon la revendication 1, ***caractérisée* en ce que** la couche de mousse (2) de polyoléfine réticulée est une couche de mousse de polypropylène réticulé

8. Structure multicouche (1) selon la revendication 1, ***caractérisée* en ce qu'**elle présente une épaisseur comprise entre 1,5 mm et 6 mm, et de préférence comprise entre 1,5 mm et 3 mm.

9. Structure multicouche (1) selon la revendication 8, ***caractérisée* en ce que** :
- la couche d'usure (E1) comprend une épaisseur comprise entre 0,3 mm et 1 mm ;
- la couche décor (E2) est un film PVC imprimé d'épaisseur 70µm ;
- la couche d'envers (E3) présente une épaisseur comprise entre 1 et 3mm.

## Patentansprüche

1. Mehrschichtige Struktur (1) zur Herstellung eines Boden- oder Wandbelags, wobei diese Struktur umfasst:
- eine erste Einheit (E), die nacheinander mindestens umfasst:
^{∗} eine transparente Verschleißschicht (E1), hergestellt aus Polyvinylchlorid;
^{∗} eine Dekorschicht (E2), verbunden mit der Verschleißschicht (El);
^{∗} eine Trägerschicht (E3), verbunden mit der Dekorschicht (E2), ausgeführt aus plastifiziertem Polyvinylchlorid mit Zuschlägen;
- eine Schaumstoffschicht (2), verbunden mit der Trägerschicht (E3), die der Struktur akustische Isolierungseigenschaften verleiht und eine Unterseite hat, die in Kontakt mit dem Boden oder der Mauer kommen soll;
***dadurch gekennzeichnet, dass*** die:
- erste Einheit (E) ein Dehnungsmodul bei 1% Dehnung von über 5 MPa enthält und eine Biegemodul von 3,5% zwischen10 Mpa und 20 Mpa, gemessen nach der Norm ISO 178 :2019;
bei der Schaumstoffschicht (2) handelt es sich um eine Schaumstoffschicht aus vernetztem Polyolefin mit einer Dicke zwischen 0,5 mm und 2 mm, und einer Dichte zwischen 60 kg/m³ und 120 kg/m³.

2. Mehrschichtige Struktur (1) nach Anspruch 1, ***dadurch gekennzeichnet, dass*** die Trägerschicht (E3) eine Menge an Weichmacher enthält, die zwischen 10 und 30 pro Hundert Teile Harz liegt und vorzugsweise zwischen 15 und 25 pro Hundert Teile Harz.

3. Mehrschichtige Struktur (1) nach Anspruch 1, ***dadurch gekennzeichnet, dass*** die Trägerschicht (E3) zwei Zwischenschichten (E31, E32) enthält, hergestellt aus plastifiziertem Polyvinylchlorid mit Zuschlägen und angeordnet beiderseits einer Verstärkungsbewehrung (E33), die beiden Zwischenschichten (E31, E32) enthalten dabei eines Weichmachermenge zwischen 25 und 50 PCR pro Hundert Teile Harz.

4. Mehrschichtige Struktur (1) nach Anspruch 1, ***dadurch gekennzeichnet, dass*** die Dicke der Schaumstoffschicht (2) zwischen 0,8 mm und 1,2mm liegt.

5. Mehrschichtige Struktur (1) nach Anspruch 1, ***dadurch gekennzeichnet, dass*** die Dichte der Schaumstoffschicht (2) zwischen 80 kg/m³ und 110 kg/m³ liegt.

6. Mehrschichtige Struktur (1) nach Anspruch 1, ***dadurch gekennzeichnet, dass*** die Schaumstoffschicht (2) aus vernetztem Polyolefin eine Schaumstoffschicht aus vernetztem Polyethylen ist.

7. Mehrschichtige Struktur (1) nach Anspruch 1, ***dadurch gekennzeichnet, dass*** die Schaumstoffschicht (2) aus vernetztem Polyolefin eine Schaumstoffschicht aus vernetztem Polypropylen ist.

8. Mehrschichtige Struktur (1) nach Anspruch 1, ***dadurch gekennzeichnet, dass*** sie eine Dicke zwischen 1,5 mm und 6 mm hat, und vorzugsweise zwischen 1,5 mm und 3 mm.

9. Mehrschichtige Struktur (1) nach Anspruch 8, ***dadurch gekennzeichnet, dass*** die:
- Verschleißschicht (E1) eine Dicke zwischen 0,3 mm und 1 mm hat;
- die Dekorschicht (E2) eine bedruckte PVC- Folie mit einer Dicke von 70 µm ist;
- die Trägerschicht (E3) eine Dicke zwischen 1 und 3mm hat.

## Claims

1. Multi-layered structure (1) for the production of a floor or wall covering, the structure comprising:
- a first assembly (E) successively comprising at least:
^{∗} a transparent wear layer (E1) made of polyvinyl chloride;
^{∗} a decorative layer (E2) bonded to the wear layer (El);
^{∗} a backing layer (E3), bonded to the decorative layer (E2), made of plasticized and loaded polyvinyl chloride;
- a foam layer (2), bonded to the backing layer (E3), imparting sound-insulating properties to the structure, and having a lower face intended to be in contact with the floor or wall;
***characterized* in that**:
- the first assembly (E) comprises a tensile modulus for 1% elongation greater than 5 MPa, and a flexural modulus at 3.5% between 10 MPa and 20 MPa, measured in accordance with the ISO 178:2019 standard;
- the foam layer (2) is a cross-linked polyolefin foam layer, having a thickness between 0.5 mm and 2 mm, and a density between 60 kg/m³ and 120 kg/m³.

2. Multi-layered structure (1) according to claim 1, ***characterized* in that** the backing layer (E3) comprises an amount of plasticizer between 10 and 30 parts per hundred of resin, and preferably between 15 and 25 parts per hundred of resin.

3. Multi-layered structure (1) according to claim 1, ***characterized* in that** the backing layer (E3) comprises two intermediate layers (E31, E32) made of plasticized and loaded polyvinyl chloride, and arranged on either side of a reinforcement frame (E33), the two intermediate layers (E31, E32) comprising an amount of plasticizer between 25 and 50 parts per hundred of resin (PHR).

4. Multi-layered structure (1) according to claim 1, ***characterized* in that** the thickness of the foam layer (2) is between 0.8 mm and 1.2 mm.

5. Multi-layered structure (1) according to claim 1, ***characterized* in that** the density of the foam layer (2) is between 80 kg/m³ and 110 kg/m³.

6. Multi-layered structure (1) according to claim 1, ***characterized* in that** the cross-linked polyolefin foam layer (2) is a cross-linked polyethylene foam layer

7. Multi-layered structure (1) according to claim 1, ***characterized* in that** the cross-linked polyolefin foam layer (2) is a cross-linked polypropylene foam layer

8. Multi-layered structure (1) according to claim 1, ***characterized* in that** it has a thickness between 1.5 mm and 6 mm, and preferably between 1.5 mm and 3 mm.

9. Multi-layered structure (1) according to claim 8, ***characterized* in that**:
- the wear layer (E1) comprises a thickness between 0.3 mm and 1 mm;
- the decorative layer (E2) is a printed PVC film with a thickness of 70 µm;
- the backing layer (E3) has a thickness between 1 and 3 mm.
